# EUROPÄISCHE PATENTANMELDUNG

(11) **EP 1 382 568 A1**
(43) Veröffentlichungstag der Anmeldung: **21.01.2004**
(21) Anmeldenummer: 03015369.6
(22) Anmeldetag: 08.07.2003
(51) Int. Cl.: C01B 3/34, H01M 8/06

(54) **Apparat zur Erzeugung von Wasserstoff und Verfahren zum Betrieb eines solchen Apparats**

(30) Priorität: 12.07.2002 DE 10231884
(71) Anmelder: Viessmann Werke GmbH & Co KG, 35107 Allendorf (DE)
(72) Erfinder: Heikrodt, Klaus, Dr., 35108 Allendorf (DE); Dzubiella, Manfred, Dr., 35066 Frankenberg (DE)
(74) Vertreter: Wolf, Günter, Dipl.-Ing.

(57) **Zusammenfassung**

Die Erfindung betrifft einen Apparat zur Erzeugung von Wasserstoff zum Betrieb einer PEM-Brennstoffzelle (3) zur Stromund Wärmeversorgung von Gebäuden sowie ein Verfahren zum Betrieb dieses Apparats. Der Apparat umfasst einen allothermen Reformer (1) zur Umwandlung von Kohlenwasserstoffgas und Wasser in Wasserstoff und weitere Reformer-Produkte, wie Kohlenmonoxid und Kohlendioxid, wobei dem mit einem Gasbrenner (4) versehenen Reformer (1) mindestens eine Katalysatorstufe (2) nachgeschaltet ist. Nach der Erfindung ist vorgesehen, dass zur Produktgasrückführung wahlweise mindestens vor oder nach der Katalysatorstufe (2) eine verschließbare, mit dem Gasbrenner (4) verbundene Rückführleitung (5) vorgesehen ist.

## Beschreibung

Die Erfindung betrifft einen Apparat zur Erzeugung von Wasserstoff zum Betrieb einer PEM-Brennstoffzelle gemäß dem Oberbegriff des Anspruchs 1 und ein Verfahren zum Betrieb eines solchen Apparats nach dem Oberbegriff des Anspruchs 6.

Nach der DE 100 57 537 A1 ist ein Gaserzeugungssystem für Brennstoffzellen bekannt, das aus einem mit einem Brenner beheizten Reformer und nachgeschalteten Gasreinigungsstufen besteht. Je nach erforderlicher Reinheit des Produktgases bezüglich seiner Kohlenmonoxid-Konzentration sind ein oder mehrere von diesen sogenannten Shiftstufen vorgesehen, in denen das im Reformer entstandene Kohlenmonoxid in für die Brennstoffzelle unschädliches Kohlendioxid umgewandelt wird. Vom Produktgasabfuhranschluss des Gaserzeugungssystems strömt somit insbesondere Wasserstoff, Kohlendioxid, eventuell eine geringe Menge nicht umgewandeltes Kohlenwasserstoffgas und eine möglichst geringe Menge an Kohlenmonoxid zum Anodenanschluss der Brennstoffzelle.

Solange dieses System im stationären Zustand arbeitet, ist die Produktgasherstellung in aller Regel problemlos beherrschbar. Schwieriger wird es allerdings, wenn insbesondere kurzfristig eintretende Betriebszustände der Brennstoffzelle (beispielsweise Störfälle wie Notaus oder ein Anodendefekt) eine geringere oder überhaupt keine Wasserstoffreformierung mehr erfordern, da dann der - prozesstechnisch gesehen - relativ träge Reformer auf den neuen Zustand eingeregelt werden muss, was insbesondere hinsichtlich der erforderlichen Kohlenmonoxidreinheit des Produktgases schwierig ist.

Der Erfindung liegt dementsprechend die Aufgabe zugrunde, einen Apparat der eingangs genannten Art auf technisch möglichst einfache Art dahingehend weiterzubilden, dass bei Betriebszustandsänderungen der Brennstoffzelle das dann stets überschüssige Produktgas möglichst nutzbringend einsetzbar ist.

Diese Aufgabe ist gegenständlich mit einem Apparat der eingangs genannten Art durch die im Kennzeichen des Anspruchs 1 aufgeführten Merkmale gelöst. Bezüglich der erfindungsgemäßen Verfahrensmerkmale wird auf das Kennzeichen des Anspruchs 6 verwiesen.

Der Erfindung liegt mithin die Idee zugrunde, am Gasaufbereitungssystem eine Bypassleitung vorzusehen, mittels derer der bei einer Betriebszustandsänderung nicht mehr erforderliche Produktgasstrom zum Reformerbrenner zurückführbar ist. Die Bypassleitung kann dabei wahlweise direkt nach dem Reformer aber auch erst nach der oder den Shiftstufen angeordnet sein. Wesentlich ist, dass beim Eintritt einer Betriebszustandsänderung - beispielsweise bei einer Notabschaltung des Stroms - mittels eines vorzugsweise automatisch betätigten Ventils der Produktgasstrom direkt über die Bypassleitung zum Brenner transportiert und dort verbrannt wird. Die Stromproduktion der Brennstoffzelle kann auf diese Weise unmittelbar abgeschaltet werden, und zwar ohne einen wesentlichen Einfluss auf das Gasaufbereitungssystem, das bei Bedarf trotz der Produktgasumleitung praktisch ungestört (aufgrund der sich ändernden Energiebilanz muss natürlich geringfügig nachgeregelt werden) weiter Wasserstoff produzieren kann. So ist es beispielsweise bei einem kleineren Störfall ohne weiteres möglich, dass die Brennstoffzelle kurzzeitig keinen Wasserstoff erhält, während das Gaserzeugungssystem, ohne überhaupt den stationären Betrieb zu verlassen, weiterbetrieben wird. Dies ist in manchen Situationen in Anbetracht des andernfalls notwendig werdenden, aufwendigen An- und Abfahrens des Gaserzeugungssystems durchaus zweckmäßig, selbst wenn dabei für eine kurze Zeit der gerade erzeugte Wasserstoff im Reformerbrenner wieder verbrannt wird. Vorallem besteht aber durch die erfindungsgemäße Lösung die Möglichkeit, die Brennstoffzelle im Bedarfsfall sofort abschalten zu können, ohne dass das Produktgas dabei speziell entsorgt werden müßte bzw. ohne dass durch einen wesentlichen Regeleingriff am Gaserzeugungssystem die Produktgaszusammensetzung negativ beeinflusst würde.

Aus der JP 03129674 A ist zwar ein Apparat zur Erzeugung von Wasserstoff mit einer nach dem Reformer angeordneten Bypassleitung bekannt, dieser Apparat arbeitet aber mit Methanol und benötigt daher auch keine Shiftstufen, d. h. die gesamte Kohlenmonoxid- und Brennstoffzellenvergiftungs-Problematik spielt bei diesem Apparat keine Rolle. Ferner wird die Bypassleitung ausschließlich dazu benutzt, um den Apparat möglichst schnell starten zu können; der erfindungsgemäße Einsatz des Bypasses bei einem Störfall ist nicht offenbart und auch nicht nahegelegt.

Die aus der DE 100 10 071 C2 bekannte Vorrichtung zur Erzeugung eines wasserstoffreichen Gases unterscheidet sich von dem erfindungsgemäßen Apparat und Verfahren insbesondere dadurch, dass der dort verwendete Brenner nicht zum Reformierungsreaktor gehört und somit auch nicht in der erfindungsgemäßen, vorteilhaften Weise nutzbar ist.

Andere vorteilhafte Weiterbildungen der Erfindung ergeben sich aus den abhängigen Ansprüchen.

Der erfindungsgemäße Apparat zur Erzeugung von Wasserstoff einschließlich seiner vorteilhaften Weiterbildungen wird nachfolgend anhand der zeichnerischen Darstellung von zwei Ausführungsbeispielen näher erläutert.

Es zeigt schematisch
- Fig. 1: den erfindungsgemäßen Apparat mit einer zwischen dem Reformer und der Katalysatorstufe angeordneten Rückführleitung und
- Fig. 2: den Apparat mit einer nach der Katalysatorstufe und vor der Brennstoffzelle angeordneten Rückführleitung.

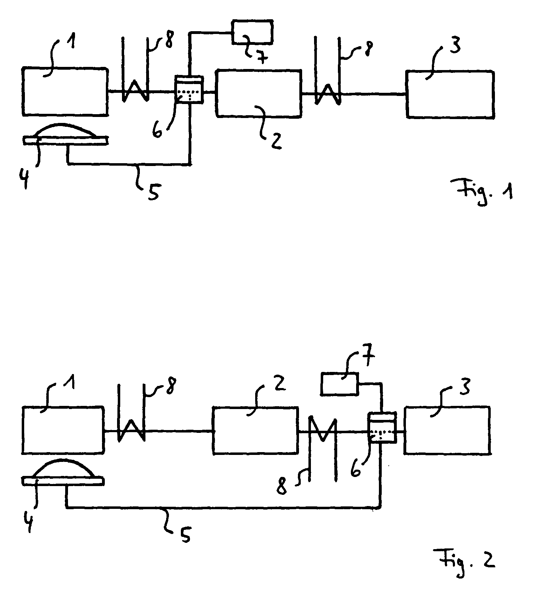

Die in den Fig. 1 und 2 dargestellte, aus Gaserzeugungssystem und Brennstoffzelle bestehende Schaltung umfasst insbesondere einen allothermen Reformer 1 zur Umwandlung von Kohlenwasserstoffgas und Wasser in Wasserstoff und weitere Reformer-Produkte, wie Kohlenmonoxid und Kohlendioxid. Dem mit einem thermischen Gasbrenner 4 versehenen Reformer 1 ist dabei eine Katalysatorstufe 2 nachgeschaltet, wobei, wie erwähnt, auch mehrere dieser Katalysatorstufen vorgesehen sein können.

Wesentlich für die Ausführungsform nach Fig. 1 ist nun, dass zur Produktgasrückführung vor der Katalysatorstufe 2 eine mit einem Ventil 6 verschließbare und mit dem Gasbrenner 4 verbundene Rückführleitung 5 vorgesehen ist.

Im Unterschied hierzu ist bei der Ausführungsform nach Fig. 2 vorgesehen, dass die Rückführleitung 5 erst nach der Katalysatorstufe 2 angeordnet ist. Aber auch bei dieser bevorugten Variante weist das Ventil 6 zwei definierte Durchströmstellungen auf (gepunktet angedeutet), nämlich einerseits vom Gaserzeugungssystem (d. h. Reformer 1 und gegebenenfalls Katalysatorstufe 2) zur Brennstoffzelle 3 und andererseits vom Gaserzeugungssystem zurück zum Gasbrenner 4.

Damit bei einer Betriebszustandsänderung die Stellung des Ventils 6 automatisch korrekt gewählt wird, ist dieses vorzugsweise, wie dargestellt, mit einer Regeleinheit 7 verbunden. Zwischen dem Reformer 1 und der Katalysatorstufe 2 sowie zwischen dieser und der Brennstoffzelle 3 sind Wärmetauscher 8 angeordnet, mit denen das Produktgas auf die jeweils für die nächstfolgende Komponente richtige Temperatur gebracht wird. Der Reformer 1 und der Gasbrenner 4 weisen (nicht dargestellt) jeweils eine Kohlenwasserstoffgaszufuhrleitung auf. Der Reformer 1 ist ferner mit einem Wasserdampfzufuhranschluss versehen.

### Bezugszeichenliste

- 1: Reformer
- 2: Katalysatorstufe
- 3: Brennstoffzelle
- 4: Gasbrenner
- 5: Rückführleitung
- 6: Ventil
- 7: Regeleinheit
- 8: Wärmetauscher

## Patentansprüche

1. Apparat zur Erzeugung von Wasserstoff zum Betrieb einer PEM-Brennstoffzelle (3) zur Strom- und Wärmeversorgung von Gebäuden, umfassend einen allothermen Reformer (1) zur Umwandlung von Kohlenwasserstoffgas, vorzugsweise Methangas, und Wasser in Wasserstoff und weitere Reformer-Produkte, wie Kohlenmonoxid und Kohlendioxid, wobei dem mit einem Gasbrenner (4) versehenen Reformer (1) mindestens eine Katalysatorstufe (2) nachgeschaltet ist,
**dadurch gekennzeichnet,**
**dass** zur Produktgasrückführung wahlweise mindestens vor oder nach der Katalysatorstufe (2) eine verschließbare, mit dem Gasbrenner (4) verbundene Rückführleitung (5) vorgesehen ist.

2. Apparat zur Erzeugung von Wasserstoff nach Anspruch 1,
**dadurch gekennzeichnet,**
**dass** die Rückführleitung (5) ein Ventil (6) aufweist.

3. Apparat zur Erzeugung von Wasserstoff nach Anspruch 2,
**dadurch gekennzeichnet,**
**dass** das Ventil (6) zwei definierte Durchströmstellungen aufweist, nämlich einerseits vom Gaserzeugungssystem zur Brennstoffzelle (3) und andererseits vom Gaserzeugungssystem zurück zum Gasbrenner (4).

4. Apparat zur Erzeugung von Wasserstoff nach Anspruch 2 oder 3,
**dadurch gekennzeichnet,**
**dass** das Ventil (6) wahlweise zwischen dem Reformer (1) und der mindestens einen Katalysatorstufe (2) oder produktgasstrombezogen hinter der Katalysatorstufe (2) angeordnet ist.

5. Apparat zur Erzeugung von Wasserstoff nach einem der Ansprüche 2 bis 4,
**dadurch gekennzeichnet,**
**dass** das Ventil (6) mit einer Regeleinheit (7) verbunden und von dieser bezüglich seiner Durchströmstellung betätigbar ist.

6. Verfahren zum Betrieb eines Apparats zur Erzeugung von Wasserstoff zum Betrieb einer PEM-Brennstoffzelle (3) zur Strom- und Wärmeversorgung von Gebäuden, wobei mit einem allothermen Reformer (1) Kohlenwasserstoffgas, vorzugsweise Methangas, und Wasser in Wasserstoff und weitere Reformer-Produkte, wie Kohlenmonoxid und Kohlendioxid, umgewandelt werden und wobei dem mit einem Gasbrenner (4) versehenen Reformer (1) mindestens eine Katalysatorstufe (2) nachgeschaltet ist,
**dadurch gekennzeichnet,**
**dass** bei Bedarf, insbesondere bei einem Störfall, der Wasserstoff und die weiteren Reformerprodukte über eine wahlweise vor oder nach der Katalysatorstufe (2) angeordnete und verschließbare Rückführleitung (5) zum Gasbrenner (4) zurückgeführt werden.
